# EUROPÄISCHE PATENTSCHRIFT

(11) **EP 0 556 159 B1**
(45) Veröffentlichungstag und Bekanntmachung des Hinweises auf die Patenterteilung: **06.10.1999**
(21) Anmeldenummer: 93810076.5
(22) Anmeldetag: 08.02.1993
(51) Int. Cl.: B07C 3/08, B65G 47/96

(54) **Anlage zum Sortieren von Stückgütern**
Arrangement for sorting parcels
Installation de tri de colis

(30) Priorität: 10.02.1992 DE 4203799
(43) Veröffentlichungstag der Anmeldung: 18.08.1993
(73) Patentinhaber: GRAPHA-HOLDING AG, 6052 Hergiswil (CH)
(72) Erfinder: Killer, Viktor, CH-8616 Riedikon (CH); Maier, Willy, CH-8302 Kloten (CH)

(56) Entgegenhaltungen:
- DE-U- 9 201 541
- FR-A- 2 596 299
- GB-A- 2 174 353

## Beschreibung

Die Erfindung betrifft eine Anlage zum Sortieren von Stückgütern nach dem Oberbegriff von Patentanspruch 1.

Im DE - Patent 30 50 102 ist eine Sortieranlage beschrieben: Auf einer zu einer Schleife geschlossenen Schiene läuft eine endlose Wagenkette um. Jeder Wagen dieser Wagenkette hat eine Schale, die um eine geneigte Achse aus einer horizontalen Grundstellung in zwei Kippstellungen schwenkbar ist. Längs der Schleife sind mehrere Beschickungsstationen vorhanden, an welchen die Schalen mit Stückgutern beschickt werden, und mehrere Zielstationen. An der Beschickungsstation wird dem mit dem Stückgut beschickten Wagen eine der Zielstationen zugeordnet. Wenn er bei dieser anlangt, wird dort eine horizontale Schiene quer verschoben, so dass sie auf den Aussenumfang einer am Wagen drehbar gelagerten Scheibe drückt. Dadurch wird diese gedreht und schwenkt die Schale in eine ihrer beiden Kippstellungen, so dass das Stückgut an dieser Zielstation abgeladen wird.

Wenn allerdings sehr viele Zielstationen bedient werden müssen, ist die Anlage nicht rationell ausgelastet, weil eine grössere Anzahl von Wagen jeweils lange Wegstrecken leer zurücklegt.

Der vorliegenden Erfindung liegt die Aufgabe zugrunde, eine Sortieranlage der eingangs geschilderten Art derart auszubilden, dass sie bei grossen Verteilerzentren einen rationellen Einsatz ermöglicht. Diese Aufgabe wird durch die Merkmalskombination gemäss Patentanspruch 1 gelöst.

Durch die Aufteilung in eine durch eine geschlossene erste Schiene gebildete erste Schleife, bei welcher die Wagen mit Stückgütern beschickt werden und mindestens eine durch eine geschlossene zweite Schiene gebildete zweite Schleife, an welcher die Zielstationen angeordnet sind, kann diese zweite Schleife zweimal an einer Uebergabestelle der ersten Schleife vorbeigeführt werden. Dadurch können die zweiten Schleifen in jeweils zwei Halbschleifen aufgeteilt werden, sodass die Transportwege zwischen der Beschickung und den Zielstationen und damit auch die Rückführwege der leeren Wagen kürzer werden. Damit können die Wagenketten rationeller ausgelastet und der Raumbedarf reduziert werden, was die Anlage- und Unterhaltskosten senkt.

Nachfolgend wird ein Ausführungsbeispiel der Erfindung anhand der Zeichnung erläutert. Darin zeigt:
Fig. 1 einen vereinfachten Grundriss einer Anlage,
Fig. 2 eine Seitenansicht eines Teils der Anlage,
Fig. 3 einen vergrösserten Ausschnitt der Ansicht nach Fig. 2,
Fig. 4 eine Stirnansicht eines Wagens,
Fig. 5 und 6 Schnitte längs den Linien V-V bzw. VI-VI in Fig. 3,
Fig. 7 eine Stirnansicht einer anderen Ausführung des Fahrwerkes,
Fig. 8 eine Ansicht von unten auf das Fahrwerk nach Fig. 7,
Fig. 9 eine Draufsicht auf eine Uebergabestelle,
Fig. 10 einen Teilquerschnitt durch eine Uebergabestelle,
Fig. 11 eine Seitenansicht einer Steuerkurve, und
Fig. 12 eine Draufsicht auf eine Variante der Uebergabestelle ohne Wagen.

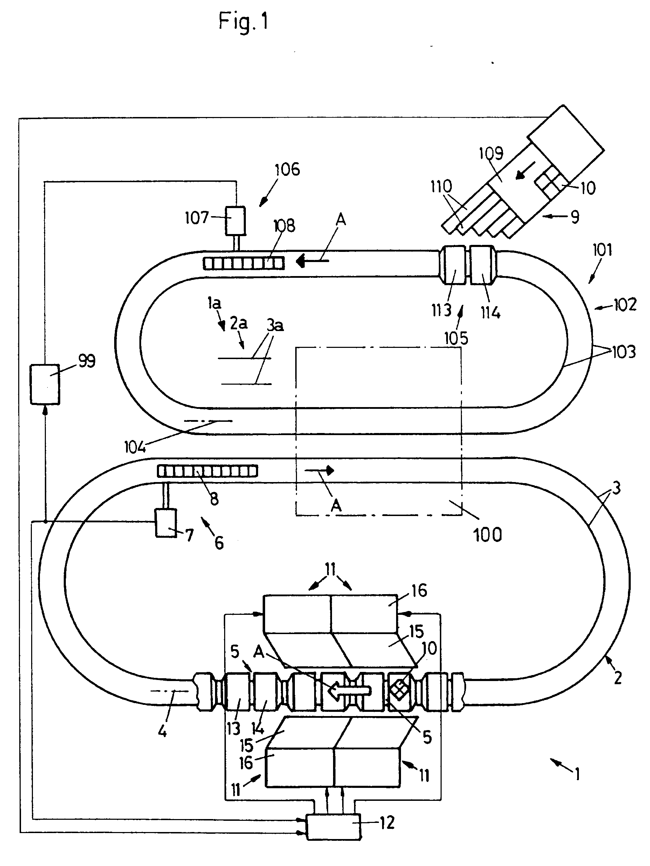

Die lediglich schematisch dargestellte Anlage nach Fig. 1 ist z.B. geeignet zum Sortieren von Postsendungen in Postverteilungszentren. Sie umfasst eine Grobverteileranlage 101 und mehrere Feinverteileranlagen 1, 1a. Die Anlagen 1, 1a und 101 sind im wesentlichen gleich aufgebaut. Die um die Zahl 100 erhöhten Bezugszeichen der Anlage 101 beziehen sich auf gleiche Bauteile der Anlage 101, wie sie ausführlich mit den ein- bzw zweistelligen Bezugszeichen lediglich bei der Anlage 1 detailliert erläutert werden. Abweichungen zwischen den Anlagen 1 und 101 werden später erläutert. Jede Anlage 1,1a, 101 umfasst je eine zu einer Schleife 2, 2a, 102 geschlossene Schiene 3, 3a, 103 und eine endlose Wagenkette 4, 104 bestehend aus miteinander gekoppelten, auf der betreffenden Schiene 3, 3a, 103 geführten Wagen 5, 105.

Die Schleifen 2, 102 sind der besseren Uebersicht wegen stark vereinfacht dargestellt und verlaufen ebenfalls aus Uebersichtlichkeitsgründen bloss an einer einzigen Uebergabestelle 100 parallel nebeneinander. In der praktischen Anwendung wird mindestens eine der Schleifen 2, 102 dreidimensional geführt, zweckmässig die Grobverteilerschleife 102, weil diese bedeutend kürzer ist und entsprechend weniger Wagen 105 umfasst als die Feinverteilerschleifen 2, 2a. Dadurch wird es möglich, jede Feinverteilerschleife an zwei Uebergabestellen 100 längs der Grobverteilerschleife 102 zu führen und damit die Feinverteilerschleifen 2, 2a in zwei etwa gleiche Hälften zu unterteilen.

Je ein Antrieb 6, 106 bestehend aus einem Antriebsmotor 7, 107 und einer Antriebskette 8, 108 treibt die Wagen 4, 104 in Fahrtrichtung A. Wenn die Schleife 2 lang ist, kann es zweckmässig sein, mehrere Antriebe 6 längs der Schleife 2 zu verteilen. Bei 1 km Länge der Schleife 2 können z.B. fünf Antriebe 6 vorgesehen werden, die bezüglich Winkelgeschwindigkeit. und Drehwinkel miteinander .synchronisiert sein müssen. Der der Uebergabestelle 100 benachbarteste Antrieb 6 ist ausserdem über eine Synchronisiereinrichtung 99 mit dem Antrieb 106 bezüglich Geschwindigkeit und Drehwinkel derart synchronisiert, dass an der Uebergabestelle 100 jeweils ein Wagen 5 genau neben einem Wagen 105 herläuft, eventuell um einen vorgegebenen kleinen Betrag in Fahrtrichtung A zurückversetzt. Im einfachsten Fall besteht die Synchronisiereinrichtung 99 in einer mechanischen Kopplung, z.B. über eine Kardanwelle, so dass der Motor 107 entfällt.

Längs der Schleife 102 sind mehrere Beschickungsstationen 9 angeordnet, an welchen Pakete 10 auf die Wagenkette 104 aufgeladen werden, wobei jedem beschickten Wagen 105 eine von mehreren Zielstationen 11 zugeordnet wird. Bei den Beschickungsstationen 9, von welchen der besseren Uebersicht wegen nur eine dargestellt ist, wird auf den Paketen 10 ein Strichcode entsprechend der Destination angebracht. Anschliessend werden sie auf einem ersten Förderband 109 auf ein stillstehendes, segmentiertes zweites Förderband 110 transportiert, wo von einem Lesegerät der Strichcode gelesen und gespeichert wird. Sobald ein freier Wagen 105 vorbeifährt, wird das Paket 10 mittels des Bandes 110 auf diesen Wagen 105 aufgeladen und gleichzeitig ein Signal an eine zentrale Steuereinrichtung 12 abgegeben, welche die Destination des Pakets und die Wagennummer speichert. An der Uebergabestelle 100 wird das Paket 10 auf den nebenherlaufenden Wagen 5 je nach Destination der Schleife 2 oder der Schleife 2a in einer später erläuterten Art übergeben, falls dieser frei ist. Sonst dreht das Paket eine Runde auf der Schleife 102.

Die Steuereinrichtung 12 kippt an der adressierten Zielstation 11 eine Schale 13,14 oder beide Schalen 13, 14 des beladenen Wagens 5 um eine in Wagenlängsrichtung verlaufende Achse. Dadurch rutscht das Paket 10 von der Schale 13, 14 auf eine geneigte Rutsche 15 der Zielstation 11 und darauf in einen Schacht 16 und z.B. in einen darunter aufgestellten Sammelbehälter. Sowohl die Beschickungsstationen 9 als auch die Zielstationen 11 sind in Umlaufrichtung A länger als die Summe der Längen der beiden Schalen 13, 14 eines Wagens 5. Dadurch können lange Pakete auf beide Schalen 13, 14 eines Wagens aufgeladen und an der betreffenden Zielstation 11 durch gleichzeitiges Kippen beider Schalen 13, 14 abgeworfen werden. Kurze Pakete werden demgegenüber nur auf eine Einzelschale 13 oder 14 gelegt und an der Zielstation 11 dementsprechend nur diese Schale 13 bzw. 14 gekippt. Dadurch kann die andere Schale 14 bzw. 13 dieses Wagens 5 gleichzeitig ein anderes, kurzes Paket 10 zu einer anderen oder der gleichen Zielstation 11 transportieren. Durch die Aufteilung der Transportorgane in zwei Schalen 13, 14 pro Wagen wird die Sortierkapazität der Anlage 1 nahezu verdoppelt, falls grosse Pakete 10, die beide Schalen 13, 14 belegen, relativ selten vorkommen. Weil die beiden Schalen 13, 14, die gemeinsam ein grosses Paket aufnehmen können, auf einem gemeinsamen Fahrgestell montiert sind, treten zwischen ihnen in Kurven und beim Uebergang auf Steigungsstrecken keine Relativverschiebungen auf, so dass das grosse Paket sicher und ohne zu verrutschen transportiert wird.

Alternativ oder zusätzlich zur Steuerung des Kippvorganges der Schalen 13, 14 durch die Steuereinrichtung 12 kann vor jeder Zielstation 11 oder auch nur vor der ersten Zielstation 11 ein Lesegerät zum Ablesen des Strichcodes auf dem Paket 10 angeordnet sein, welches dann den Kippvorgang nach der zurückgelegten passenden Wegstrecke des Wagens 5 auslöst.

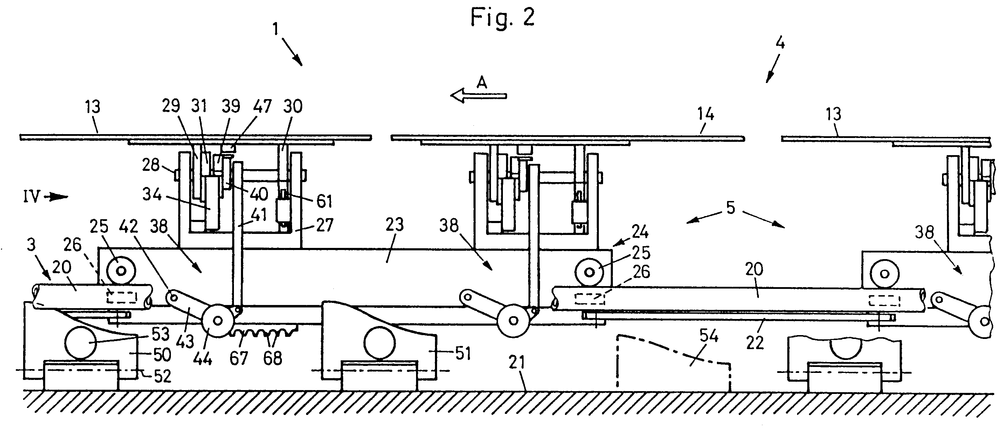

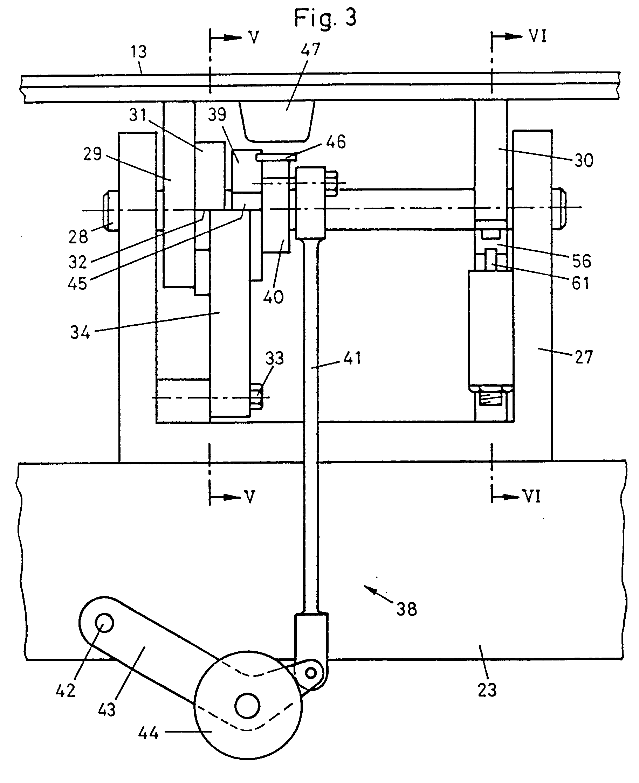

In Fig. 2 bis 6 ist ein Wagen 5 der Anlage 1 detaillierter dargestellt. Die Schiene 3 besteht aus zwei seitlich voneinander beabstandeten, parallelen Rohren 20, welche durch nicht dargestellte Träger auf einem Fundament 21 befestigt sind. Die Wagen 5 der Wagenkette 4 sind durch Gelenkstangen 22 mit sphärischen Gelenken miteinander gekoppelt. Sie bestehen aus einem Tragbalken 23 und einem daran befestigten Fahrwerk 24 aus Laufrollen 25 und Führungsrollen 26, die auf den Rohren 20 abrollen. Die Gelenkstangen 22 sind benachbart der Ebene der Führungsrollen 26 am Tragbalken 23 angelenkt, damit die Zug- und Stosskräfte der Gelenkstangen 22 zusammen mit den Seitenführungskräften nur geringe kippende Momente auf den Wagen 5 ergeben.

Auf dem Balken 23 sind zwei Schalenträger 27 festgeschraubt. Auf diesen Trägern 27 sind die Schalen 13, 14 um eine gemeinsame, horizontale, in Wagenlängsrichtung verlaufende Achse 28 mittels Lagerkörpern 29, 30 durch Nadellager schwenkbar gelagert. Am Lagerkörper 29 ist eine Verriegelungsscheibe 31 festgeschraubt. Die Scheibe 31 hat an ihrem Aussenumfang zwei radiale Schultern 32. In diese Schultern greifen in der in Fig.2, 3 und 5 dargestellten Grundstellung der Schalen 13, 14 zwei um Achsen 33 parallel zur Achse 28 schwenkbare Sperrklinken 34 ein. Die Klinken 34 sind durch eine Feder 35 gegeneinander gespannt.

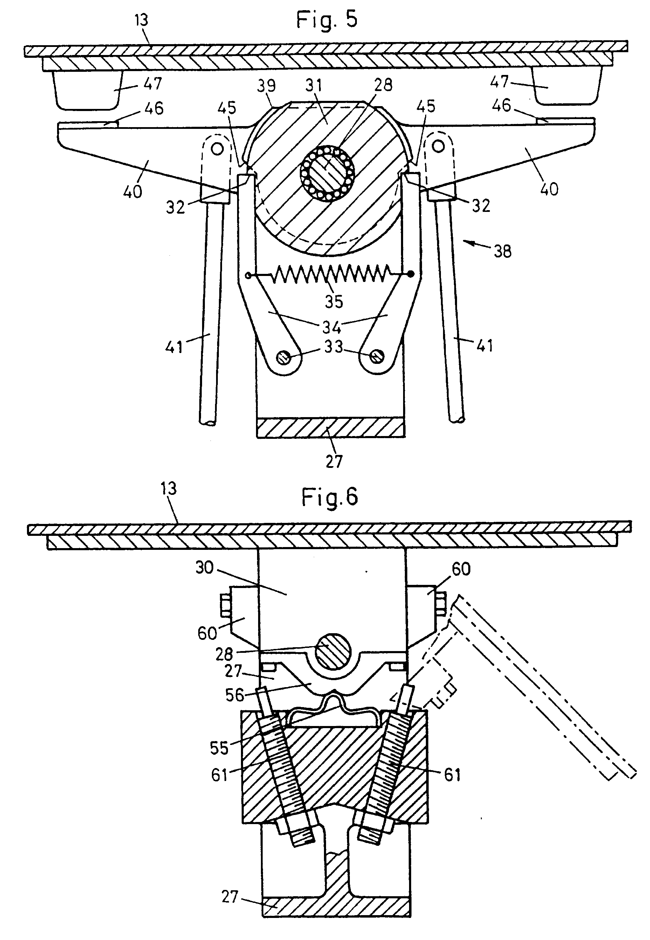

Jeder Schale 13, 14 ist ein Betätigungsorgan 38 zugeordnet. Es besteht aus einer Entriegelungsscheibe 39, die auf der Achse 28 mit weiteren Nadellagern schwenkbar gelagert ist, einem mit der Scheibe 39 verschraubten Betätigungshebel 40, zwei Schubstangen 41, je einen am Tragbalken 23 um eine Querachse 42 schwenkbar gelagerten Arm 43 und je einer am Arm 43 drehbar gelagerten Betätigungsrolle 44. Die Scheibe 39 hat zwei zur Achse 28 parallele, geneigte Flächen 45, welche beim Schwenken der Scheibe 39 eine der beiden Klinken 34 aus der in Fig. 5 dargestellten Sperrstellung anhebt und somit die Verriegelungsscheibe 31 entsprerrt. Nach einem geringen Entsperrwinkel schlägt eine von zwei Scheiben 46 an den freien Enden des Hebels 40 gegen einen an der Schale 13, 14 befestigten Gummipuffer 47 und kippt die Schale 13, 14.

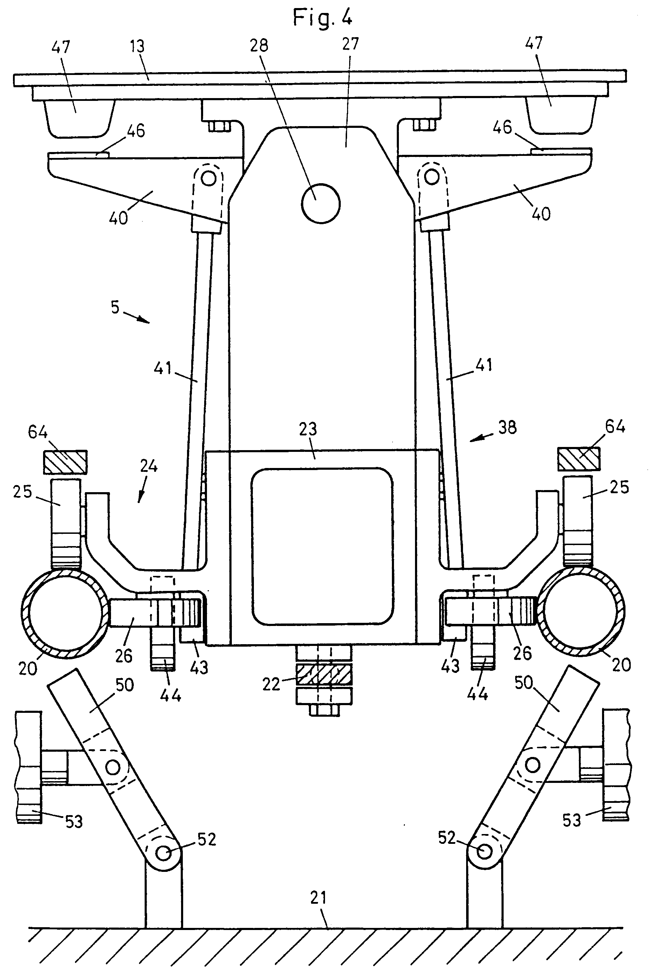

Zum Kippen der Schalen 13, 14 hat jede Zielstation 11 auf der dieser Station abgewandten Seite der Schiene 3 zwei Steuerkurven 50, 51, die um horizontale Achsen.52 gegenüber dem Fundament 21 mittels je eines Pneumatikzylinders 53 aus der in Fig. 4 dargestellten, geneigten, inaktiven Stellung in eine vertikale, aktive Stellung schwenkbar sind, in welcher die betreffende Rolle 44 auf der Steuerkurve 50, 51 aufläuft und den Hebel 40 mit der Entriegelungsscheibe 39 verschwenkt. Die beiden Steuerkurven 50, 51 einer Zielstation 11 haben denselben Abstand voneinander wie die beiden Betätigungsrollen 44 einer Seite der Wagen 5.

Jeweils vor Kurven und Steigungen sind Rückführkurven 54 auf dem Fundament 21 starr befestigt, welche jede vorbeifahrende, gekippte Schale 13, 14 wieder in die horizontale Grundstellung zurückführen. Die Rückführkurve 54 ist in Fig. 2 strichpunktiert dargestellt. Selbstverständlich ist sie in Wirklichkeit nicht unmittelbar nach einer Steuerkurve 50, 51 angeordnet. Die Rückführkurven 54 erfassen die jewils abgesenkten Rollen 44 und heben sie an, so dass der Hebel 40 in seine Mittelstellung gebracht wird. Damit ist allerdings die betreffende Schale 13, 14 noch nicht in der Grundstellung, weil sie gegenüber dem Hebel 40 um den Entsperrwinkel schwenkbar ist. Die letzte Rückführung der Schale 13, 14 in die Grundstellung besorgt ein elastisches Rastglied 55, z.B. aus Polyamid, in welches eine Rastnase 56 des Lagerkörpers 29 einrastet (Fig. 6).

Zur Endlagendämpfung sind am Lagerkörper 30 zwei Anschlagkörper 60 befestigt, die gegen je einen am Träger 27 befestigten Stossdämpfer 61 anschlagen.

Damit die auf den Wagen 5 wirkenden dynamischen Kräfte diesen nicht kippen können, ist bei allen Zielstationen 11, in Kurven und in Steigungen oberhalb jedes Rohres 20 eine zusätzliche Führungsschiene 64 angebracht (Fig. 4).

Zum Antrieb der Wagenkette 4 ist bei jedem Wagen 5 an der Unterseite des Tragbalkens 23 mindestens eine Zahnstange 67 befestigt. Die Zähne 68 der Zahnstange 67 sind auf einem tieferen Niveau als die Gelenkstangen 22. Die Antriebskette 8 ist so lang, dass jeweils mindestens zwei Zahnstangen 67 benachbarter Wagen 5 gleichzeitig in sie eingreifen.

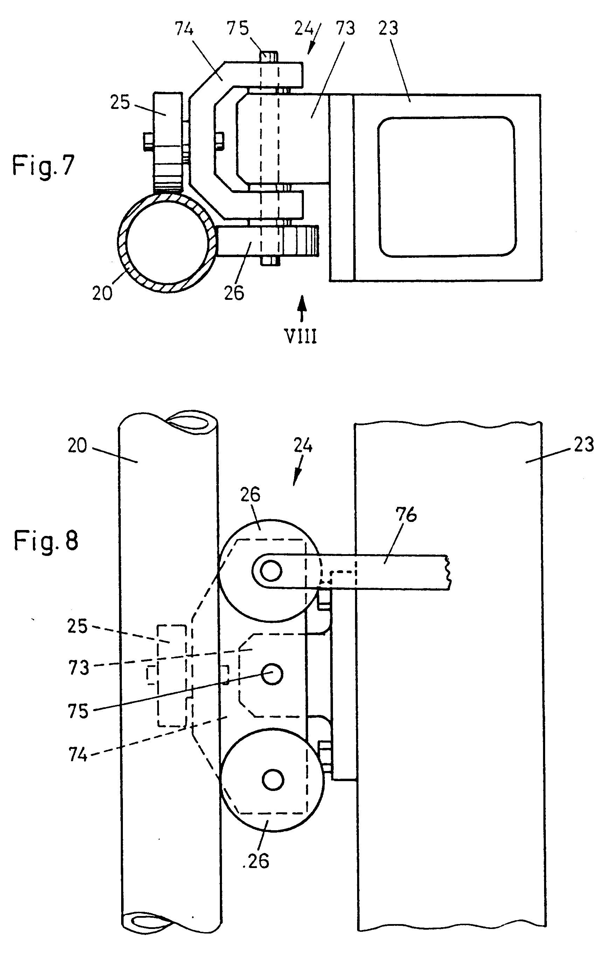

In Fig. 7 und 8 ist eine Variante des Fahrwerks 24 gezeigt, die sich vor allem für Wagen 5 mit grossem Achsabstand eignet. Um die Schrägstellung der Laufrollen 25 gegenüber den Rohren 20 und den damit verbundenen Verschleiss der Laufrollen in Kurven zu vermeiden, ist auf einem am Tragbalnken 23 festgeschraubten Träger 73 ein Rollenhalter 74 um eine vertikale Achse 75 schwenkbar gelagert. Am Rollenhalter 74 sind zwei Führungsrollen 26 beidseits der Achse 75 gelagert. Durch diese beiden Führungsrollen 26 wird der Rollenhalter 74 und damit die Laufrolle 25 parallel zum Rohr 20 geführt, unabhängig von der Schrägstellung des Tragbalkens 23 in Kurven. Die beiden vorderen und die beiden hinteren Rollenhalter 74 sind durch je eine Spurstange 76 miteinander gekuppelt, weil in Kurven nur jeweils das innere Rollenpaar 26 am Rohr 20 anliegt.

Bei langen Wagen kann es zweckmässig sein, die Betätigungsrollen 44 in regelmässigen Abständen vorzusehen. Dadurch ist die zum Einschwenken der Steuerkurven 50, 51 verfügbare Zeit für alle Rollen 44 gleich.

Mit der beschriebenen Anlage wird eine optimale Auslastung aller Schalen 13, 14 auch bei stark variierender Stückgutgrösse und damit ein rationeller Betrieb erreicht. Die formschlüssige Verriegelung der Schalen 13, 14 in ihrer Grundstellung ergibt einen sicheren Betrieb auch bei hoher Fördergeschwindigkeit. Sollte ein Verriegelungs- oder Betätigungsmechanismus defekt sein, wird die betreffende Schale 13, 14 durch die Steuereinrichtung 12 gesperrt und bei einem späteren Betriebsunterbruch der betreffende Schalenträger 27 gegen einen neuen ausgetauscht. Dieser Austausch kann rasch durchgeführt werden, weil die Wagenkette 4 nicht unterbrochen werden muss. Die beschriebene Anlage ist deshalb sehr wartungsfreundlich.

Auf identische Wagen 5 können je nach Anwendungsfall, d.h. je nach der maximal zu transportierenden Stückgutgrösse, auch kürzere oder längere Schalen 13, 14 montiert werden, wobei lediglich die Länge der Gelenkstangen 22 entsprechend anzupassen ist. Dadurch können die Wagen 5 in grossen Stückzahlen rationell gefertigt und die Lagerhaltung vereinfacht werden.

Falls die Zielstationen 11 alle auf der selben Seite der Schleife 2 sind, können die Betätigungsorgane 38 auf der einen Seite der Wagen 5 weggelassen werden. Die Rückführkurven 54 werden in diesem Fall so ausgebildet, dass sie die angehobenen Betätigungsrollen 44 nach unten ziehen.

Je nach Anwendungsfall kann es zweckmässig sein, die vorderen beiden Betätigungsrollen 44 der Wagen 5 auf einer anderen Spur zu führen als die hinteren beiden Betätigungsrollen 44, und dementsprechend die Steuerkurven 50, 51 jeder Zielstation 11 gegeneinander seitlich zu versetzen, wobei die Kurve 50, 51 mit dem geringeren Abstand von der Symmetrieebene der Schiene 3 z.B. nach innen abgeklappt wird. Dadurch steht eine grössere Wegstrecke der Wagen 5 zum Verschwenken der Steuerkurven 50, 51 zwischen der aktiven und der inaktiven Stellung zur Verfügung, so dass die Transportgeschwindigkeit erhöht oder die Anforderung an die Präzision der Aktivierung der Steuerkurven gesenkt werden kann.

Betätigungsrollen 44 und Steuerkurven 50, 51 können auch gegeneinander vertauscht sein.

Weil die Schleife 102 zweckmässig dreidimensional verlegt wird, hat sie Steigungs- und Gefällsstrecken. Vorzugsweise wird deshalb das Fahrwerk 124 der Wagen 105 entsprechend der DE-OS 35 00 704.4 ausgebildet. Die Tragbalken 123 der Wagen 105 bleiben dann auch auf Steigungs- und Gefällsstrecken horizontal. Dadurch können diese Strecken steiler verlegt werden, ohne dass die Gefahr besteht, dass die Pakete 10 abrutschen. Damit kann der Platzbedarf der Anlage 101 erheblich reduziert werden.

Im übrigen entsprechen die Wagen 105 jedoch dem beschriebenen Wagen 5.

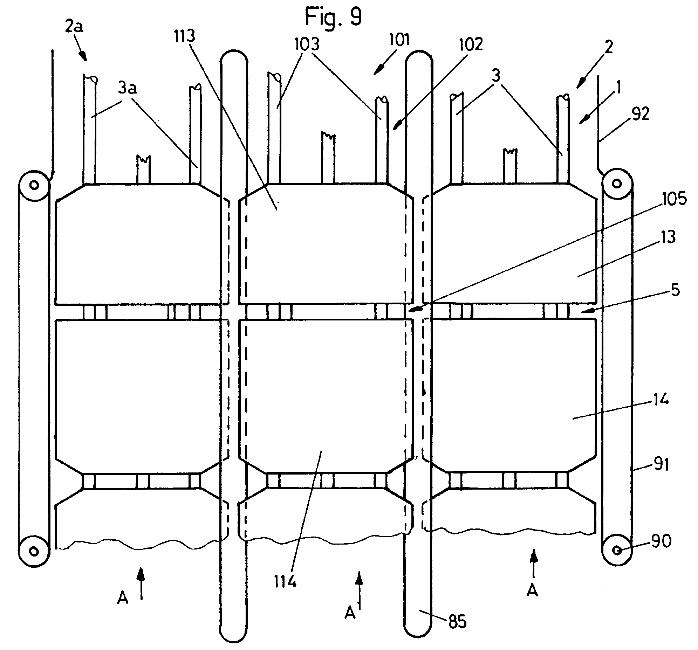

In den Fig. 9 bis 11 ist die Uebergabestelle 100 detaillierter dargestellt.

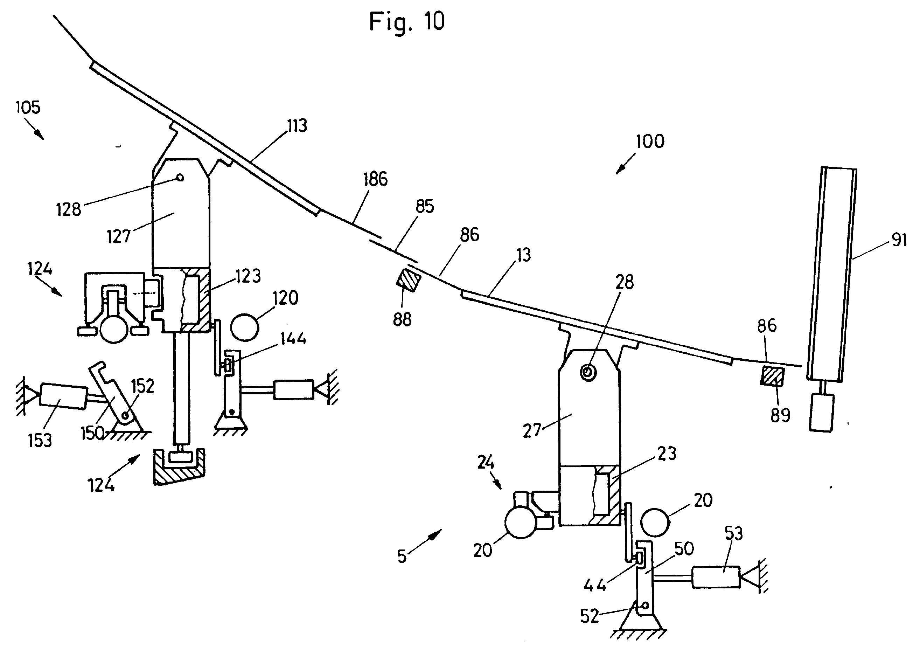

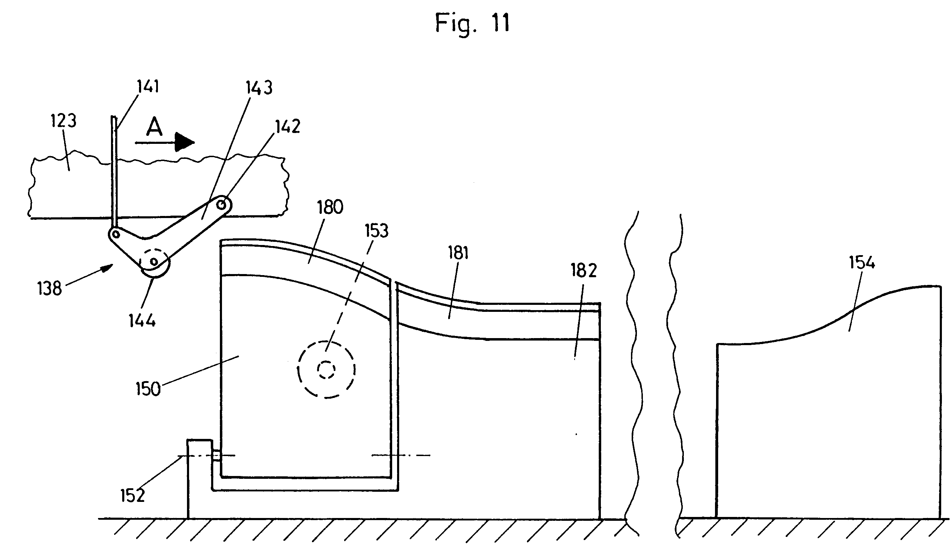

Im Gegensatz zum Kippen der Schalen 13, 14 bei den Zielstationen 11 müssen die Schalen 113, 114 bei der Uebergabestelle 100 relativ sanft geschwenkt werden, damit die Pakete 10 auf den Schalen 113, 114 seitlich gleiten und nicht etwa geworfen werden. Deshalb sind hier die Steuerkurven 150 in Fahrtrichtung länger, also weniger steil ausgebildet als die zuvor beschriebenen Steuerkurven 50 bei den Zielstationen 11, und die Betätigungsrollen 144 sind zwangsgeführt. Wie aus Fig. 10 und 11 ersichtlich ist, ist die Steuerkurve 150 als Nut 180 ausgebildet, welche in der aktiven Stellung die Betätigungsrolle 144 aus der Mittelstellung nach unten zieht und sie dabei beidseitig führt. Wie aus Fig. 11 hervorgeht, braucht nicht die ganze Länge der Steuerkurve 150 schwenkbar zu sein. Es genügt, nur einen ersten Teil schwenkbar oder seitlich verschiebbar auszubilden, während die Nut im anschliessenden Teil, in welchem die Betätigungsrolle 144 bereits um mehr als ihren Durchmesser ausgelenkt ist, in einer stationären Platte 182 verlaufen kann.

Die vor der nächsten Kurve der Schleife 102 angeordneten Rückführkurven 154 sind hingegen gleich ausgebildet wie Rückführkurven 54.

Wenn die beiden Wagen 5, 105 die Uebergabestelle 100 durchlaufen, ohne gekippt zu werden, sollten sie sich in der Draufsicht nicht überlappen, weil sonst ein auf dem auf tieferem Niveau laufenden Wagen 5 transportiertes grosses Paket, das bis zum Seitenrand des Wagens 5 ragen kann, die Seitenkante des Wagens 105 berühren könnte, was Störungen verursachen würde. Deshalb entsteht in der in Fig. 10 gezeigten gekippten Lage der Schalen 113, 13 ein Spalt zwischen den Seitenrändern. Dieser Spalt wird überbrückt durch ein stationäres Uebergangsblech 85, das etwa die gleiche Neigung hat wie die Randbereiche der Schalen 13, 113, die Schale 13 überlappt und von der Schale 113 überlappt wird.

Wie aus Fig. 10 ersichtlich ist, sind die Seitenränder 86, 186 der Schalen 13, 113 gegenüber dem Mittelbereich leicht nach oben geknickt. Um einen glatten, praktisch stufenlosen Uebergang der Pakete 10 von der Schale 113 zur Schale 13 zu erreichen, ist aus diesem Grunde die letztere wesentlich weniger geneigt. Bei einem Vollausschlag des Mittelbereiches der Schale 113 von z.B. 32° genügt für die Schale 13 eine Neigung von ca. 15°. An den Zielstationen 11 werden dagegen die Schalen 13 um einen wesentlich grösseren Winkel, z.B. um 35° gekippt. An der Uebergabestelle 100 haben sie also nicht ihren Vollausschlag. Deshalb muss entweder die Betätigungsrolle 44 oder die Schale 13 bzw. 14 nach dem Auslenken bis zum unmittelbar an die Uebergabestelle 110 anschliessenden sanften Zurückschwenken der Schalen 13, 14 in die Mittelstellung geführt sein. Weil die Schalen 13, 14 gegenüber ihrem in Fig. 10 nicht dargestellten Betätigungshebel 40 Spiel haben (Entsperrwinkel), kann es zweckmässig sein, ihren in Fig. 10 linken Rand in der ausgelenkten Stellung mittels einer Führungsschiene 88 aus Kunststoff zu unterstützen. Der Rand 86 ist dann zwischen dieser Schiene 88 und dem Uebergabeblech 85 spielarm geführt, so dass das Paket 10 praktisch stufenlos vom Blech 85 auf die Schale 13 gleitet. Wegen der geringfügigen Reibung des Paktes auf dem stationären Blech 85 wird das Paket 10 dort etwas abgebremst. Deshalb kann es zweckmässig sein, wenn der Wagen 5 um ein bestimmtes Mass gegenüber dem Wagen 105 zurückversetzt läuft.

Zusätzlich kann eine weitere Führungsschiene 89 den anderen Rand 86 der Schale 13 unterstützen. Die Schienen 88, 89 können unmittelbar anschliessend an die Uebergabestelle 100 zur Rückführung der Schale 13 in ihre gesperrte Mittelstellung benützt werden. Weil die Schale 13 beim Rückführvorgang nach der Uebergabestelle 100 beladen sein kann, reicht nämlich unter Umständen die zuvor beschriebene Rückführung mittels des Rastgliedes 55 nicht aus, weil dieses zu schwach wäre, um die einseitig beladene Schale 13 anzuheben.

Damit das Paket 10 nicht über den unteren Rand 86 der Schale 13 hinausgleitet, ist im Ueberabgabebereich der Uebergabestelle 100 ein diesen Rand überragendes, mit der Fahrgeschwindigkeit der Wagen 5 um annähernd senkrechte Walzen 90 umlaufendes Begrenzungsband 91 vorhanden. Im Aufrichtbereich reicht dazu eine ans Band 91 anschliessende stationäre Wand 92.

Durch die beschriebene Ausbildung wird erreicht, dass an der Uebergabestelle 100 ein Paket 10 glatt von einer Schale 113 bzw. 114 eines Wagens 105 auf eine vorbestimmte, durch die Steuereinrichtung 12 adressierbare Schale 13 bzw. 14 eines vorbestimmten Wagens 5 gleitet, wobei die mit dem Strichcode versehene Seite des Paketes 10 oben bleibt. Die Möglichkeit bleibt also gewahrt, dass dieser Strichcode vor den Zielstationen 11 durch ein Lesegerät z.B. zur Verifikation oder zur Steuerung der Steuerkurven 50 der Zielstationen 11 gelesen werden kann. Die beschriebene Art der direkten Uebergabe vom Grobsortierer 101 auf die Feinsortierer 1 ist ausserordentlich einfach und benötigt sehr wenige Zusatzgeräte und wenig Raum. Daher kann die Anlage kostengünstig erstellt und betrieben werden.

Falls es nicht erforderlich ist, dass der Strichcode vor den Zielstationen 11 erneut gelesen werden muss, können die Schalen 13, 14 der Wagen 5 bei der Uebergabestelle 100 horizontal bleiben. Der Rand 86 der Schalen 13, 14 verläuft dann zweckmässig etwas unterhalb des Blechs 86, so dass die Pakete 10 das letzte Stück etwas fallen. Die Steuerung des Uebergangs kann dadurch erheblich vereinfacht werden, weil an der Uebergabestelle 100 die Steuerkurven 50, die Rückführkurven 54 und die Führungsschienen 88, 89 entfallen.

Die Steuerung des Uebergangs lässt sich ebenfalls vereinfachen, wenn an der Uebergabestelle 100 sämtliche Schalen 13, 14 sämtlicher Wagen 5 des Feinverteilers 1 gekippt werden, unabhängig davon, ob auf sie ein Paket 10 zu übergeben ist und ob sie bereits beladen sind. In diesem Falle muss das Begrenzungsband 91 etwas früher beginnen, nämlich bereits dort, wo die Schalen 13, 14 gekippt werden.

Bei dieser Variante ist es auch möglich, das Uebergabeblech 85 wegzulassen, weil hier wegen der geneigten Schalen 13, 14 die beiden Schleifen 2, 102 näher aneinander geführt werden können, ohne dass die Gefahr der Kollision grosser Pakete auf den Schalen 13, 14 mit dem Rand der Schalen 113, 114 besteht.

Falls die Schleife 102 von oben her zwischen die beiden Feinverteilerschleifen 2, 2a eingeführt und auch wieder nach oben weggeführt wird, müssen dabei die Schalen 13, 14 gekippt werden, bevor die Schleife 102 das Niveau für die Uebergabe erreicht.

Wird hingegen die Schleife 102 von unten zwischen die Schleifen 2, 2a eingeführt, müssen nach dem Erreichen des für die Uebergabe erforderlichen Niveaus der Schleife 102 die Schleifen 2, 2a an die Schleife 102 angenähert werden, wobei die Schalen 13, 14 bereits bei dieser Annäherung gekippt sind.

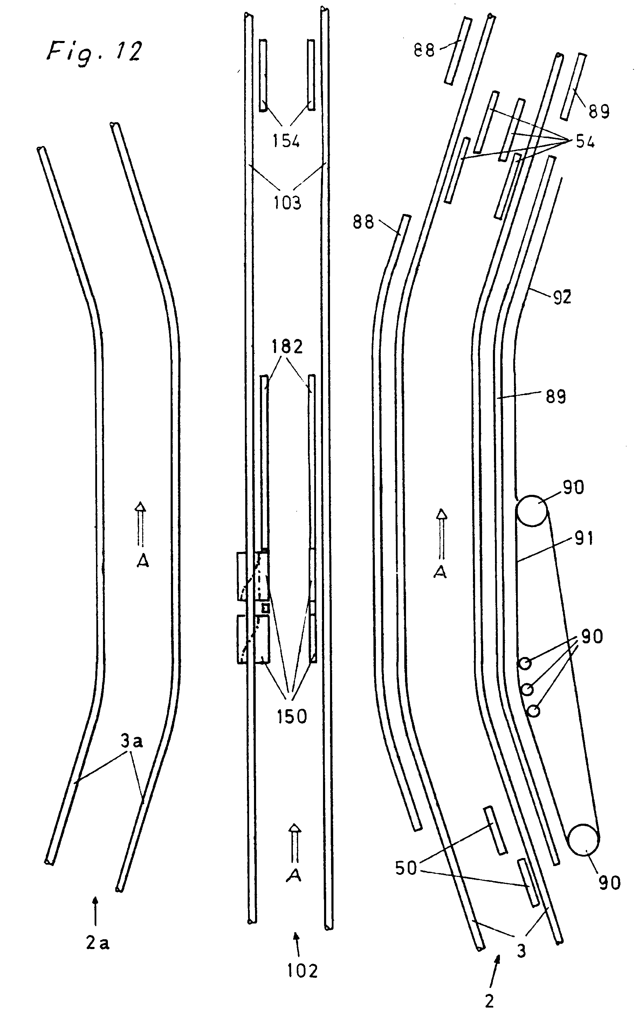

In Fig. 12 ist für diese Ausführungsvariante schematisch ein Grundriss der Uebergabestelle 100 ohne Wagen 5, 105 dargestellt, wobei die hier stationären, nicht schaltbaren Steuerkurven 50, die Rückführkurven 54, die Schienen 88, 89, das Band 91 und die Wand 92 nur bei der Schleife 2 eingezeichnet sind. Sie sind jedoch bei der Schleife 2a spiegelbildlich vorhanden.

Bei dieser Ausführungsvariante ist es zweckmässig, die beiden Betätigungsrollen 44 jeder Seite der Wagen 5 auf unterschiedlichen Spuren zu führen, z.B. indem die Rolle 44 beim in Fahrtrichtung A vorderen Arm 43 (Fig. 2) auf der Innenseite dieses Arms 43, beim hinteren Arm 43 dagegen auf der Aussenseite angebracht ist. Dadurch können zwei in Längsrichtung gegeneinander versetzte, stationäre Steuerkurven 50 beim Einlauf der Schleife 2 zum gleichzeitigen Ausschwenken der beiden Schalen 13, 14 eines Wagens 5 und ebenfalls zwei versetzte Rückführkurven 54 zum gleichzeitigen Zurückschwenken dieser Schalen angebracht werden. Dadurch werden Relativbewegungen zwischen den Schalen 13, 14 eines Wagens vermieden, was beim Transport grosser Pakete 10 wichtig ist, die beide Schalen belegen. Die kleine Winkelbewegung nach dem Aufrichten der Schalen 13, 14 zum Rückführen in ihre Sperrstellung mittels der Führungsschienen 88, 89 kann demgegenüber nacheinander erfolgen, so dass nur je eine Schiene 88, 89 pro Seite erforderlich ist. Falls auch diese kleine Winkelbewegung synchron erfolgen soll, können an den Unterseiten der Schalen 13, 14 in analoger Weise je ein Nocken oder eine Rolle pro Seite mit unterschiedlicher Spur angebracht und dementsprechend zwei in Längsrichtung gegeneinander versetzte Schienen 88, 89 anschliessend an die Rückführkurven 54 verwendet werden. Die linken Rückführkurven 54 sind gegengleich zu den rechten ausgebildet, um eine Zwangsführung beim Rückschwenken der Schalen 13, 14 zu erreichen.

Falls keine grossen Stückgüter, welche beide Schalen belegen, sortiert werden müssen, kann die Steuerung entsprechend vereinfacht und können die Beschickungsstationen 9 und die Zielstationen 11 entsprechend verkürzt werden. In diesem Falle kann jeder Wagen 5 bzw. 105 auch nur eine einzige Schale tragen. Insbesondere beim Grobverteiler 101, dessen Schleife 102 dreidimensional geführt ist, können damit engere Kurvenradien und steilere Steigungs- und Gefällsstrecken realisiert werden, was den Platzbedarf reduziert.

An die Schleifen 2, 2a können über die beschriebenen Ueberangsstellen 100 zusätzliche Schleifen angeschlossen werden. Beispielsweise kann es zweckmässig sein, eine Speicherschleife in der Art der Schleife 102 je zweimal an die Schleifen 2, 2a über Uebergabestellen 100 anzuschliessen, wobei bei der einen Uebergabestelle die Pakete 10 z.B. von der Schleife 2 auf die Speicherschleife und an der andern Uebergabestelle von der Speicherschleife auf die Schleife 2 übergeben werden könnten. Dadurch könnten auf der Schleife 2 verbliebene Pakete 10, z.B. wegen einer verstopften oder überlasteten Zielstation 11, auf der Speicherschleife gespeichert und nach Beheben der Störung automatisch wieder an diese Zeilstation 11 transportiert werden, wobei die Schleife 2 ihre volle Transportkapazität beibehält. In diesem Falle bildet die eine Uebergabestelle 100 die Beschickungsstation des Speicherbandes.

## Patentansprüche

1. Anlage zum Sortieren von Stückgütern, bestehend:
aus einer zu einer ersten Schleife (102) geschlossenen ersten Schiene (103), auf welcher mehrere zu einer von einem ersten Antrieb (106) angetriebene endlosen ersten Wagenkette (104) miteinander verbundene, auf der ersten Schiene (103) geführte erste Wagen (105) angeordnet sind, die jeweils eine um eine in Wagenlängsrichtung verlaufende Achse (128) schwenkbare erste Schale (113, 114) aufweisen, welche Schale aus einer horizontalen Grundstellung in mindestens einer Richtung in eine Kippstellung schwenkbar ist, wobei jeder erste Wagen (105) ein erstes Betätigungsorgan (138) zum Schwenken der ersten Schale (113, 114) hat; und
mindestens einer Beschickungsstation (9) längs der ersten Schleife (102) zum Beschicken der ersten Schalen (113, 114) mit Stückgütern (10); gekennzeichnet durch mindestens eine zu einer zweiten Schleife (2) geschlossenen zweiten Schiene (3);
auf welcher mehrere zu einer von einem zweiten Antrieb (6) angetriebene endlosen zweiten Wagenkette (4) miteinander gekoppelte, auf der zweiten Schiene (3) geführte zweite Wagen (5) angeordnet sind, von denen jeder eine schwenkbare zweite Schale (13, 14) aufweist, die aus einer horizontalen Grundstellung in mindestens eine Kippstellung schwenkbar ist, wobei jeder zweite Wagen (5) ein zweites Betätigungsorgan (38) zum Schwenken der zweiten Schale (13, 14) hat,
und mindestens zwei Uebergabestellen (100) pro zweite Schleife (2), in welchen die zweiten Wagen (5) der zweiten Schleife (2) parallel zu den ersten Wagen (105) der ersten Schleife (103) laufen;
eine Synchronisiereinrichtung (99), welche die Geschwindigkeit und relative Stellung der ersten und zweiten Wagenketten (4, 104) derart synchronisiert, dass an den Uebergabestellen (100) je ein erster Wagen (105) neben einem zweiten Wagen (5) mit gleicher Geschwindigkeit und vorgegebenen Längsversatz herrollt,
sowie mindestens ein Schaltorgan (150) pro Uebergabestelle (100), das zwischen einem inaktiven und einem aktiven Zustand schaltbar ist, wobei es im aktiven Zustand bei einem vorbeifahrenden ersten Wagen (105) dessen Betätigungsorgan (138) betätigt und die erste Schale (113, 114) kippt, so dass ein auf dieser Schale transportiertes Stückgut (10) auf die zweite Schale (13, 14) des daneben rollenden zweiten Wagens (5) gleitet.

2. Anlage nach Anspruch 1, dadurch gekennzeichnet, dass an der Uebergabestelle (100) ein quer zur Fahrtrichtung geneigtes stationäres Zwischenblech (85) vorhanden ist, welches von der gekippten ersten Schale (113, 114) überlappt wird.

3. Anlage nach Anspruch 1 oder 2, dadurch gekennzeichnet, dass an der Uebergabestelle (100) die zweite Schale (13, 14) durch das zweite Betätigungsorgan (38) gekippt wird.

4. Anlage nach Anspruch 3, dadurch gekennzeichnet, dass an der Uebergabestelle (100) gesteuert durch eine Steuereinrichtung (12), die zweite Schale (13, 14) nur gekippt wird, wenn an dieser Uebergabestelle (100) ein Stückgut (10) von der ersten (113, 114) auf die zweite Schale (13, 14) zu übergeben ist.

5. Anlage nach Anspruch 3, dadurch gekennzeichnet, dass an jeder Uebergabestelle (100) sämtliche zweiten Schalen (13, 14) gekippt und anschliessend wieder aufgerichtet werden.

6. Anlage nach Anspruch 5, dadurch gekennzeichnet, dass sich die äusseren Ränder der gekippten ersten (113, 114) und zweiten Schalen (13, 14) überlappen.

7. Anlage nach einem der Ansprüche 3 bis 6, dadurch gekennzeichnet, dass an der Uebergabestelle (100) auf der dem ersten Wagen (105) gegenüberliegenden Seite des zweiten Wagens (5) eine über den Rand der gekippten zweiten Schalen (113, 114) hochragende Begrenzungswand (91, 92) vorhanden ist.

8. Anlage nach Anspruch 7, dadurch gekennzeichnet, dass die Begrenzungswand (91, 92) auf mindestens einem Teil ihrer Länge als umlaufendes Band (91) ausgebildet ist.

9. Anlage nach einem der Ansprüche 3 bis 8, dadurch gekennzeichnet, dass an der Uebergabestelle (100) unterhalb mindestens eines der seitlichen Ränder der gekippten zweiten Schalen (13, 14) stationäre Führungsschienen (88, 89) angeordnet sind.

10. Anlage nach einem der Ansprüche 3 bis 9, dadurch gekennzeichnet, dass anschliessend an die Uebergabestelle (100) an den zweiten Schalen (13, 14) angreifende, stationäre Führungsschienen (88, 89) zum Zentrieren der zweiten Schalen (13, 14) in ihre horizontalen Mittelstellung vorhanden sind.

## Claims

1. An installation for sorting unit loads, comprising:
a first rail (103) which is closed to form a first loop (102) and on which a plurality of first carriages (105) is disposed, which carriages are guided on the first rail (103) and are joined to each other to form an endless string of carriages (104) driven by a first drive (106), and which each have a first tray (133, 144) which can swivel about an axis (128) running in the longitudinal direction of the carriage, which tray can swivel in at least one direction from a horizontal base position into a tilted position, wherein each first carriage (105) has a first actuating element (138) for swivelling the first tray (113, 114); and
at least one loading station (9) along the first loop (102) for loading the first trays (113, 114) with unit loads (10); characterised by at least one second rail (3) which is closed to form a second loop (2);
on which a plurality of second carriages (5) is disposed, which carriages are guided on the second rail (3) and are coupled to each other to form an endless string of carriages (4) driven by a second drive (6), and each of which has a swivelling second tray (13, 14) which can swivel from a horizontal base position into at least one tilted position, wherein each second carriage (5) has a second actuating element (38) for swivelling the second tray (13, 14);
at least two transfer locations (100) per second loop (2), in which the second carriages (5) of the second loop (2) run parallel to the first carriages (105) of the first loop (103);
a synchronisation device (99), which synchronises the speed and relative position of the first and second strings of carriages (4, 104) in such a way that at the transfer locations (100) each first carriage (105) runs beside a second carriage (5) at the same speed and with a predetermined longitudinal offset,
and comprising at least one switching element (150) per transfer location (100), which can be switched between an inactive and an active state, wherein in the active state said switching element actuates the actuating element (138) of a first carriage (105) travelling past and tilts the first tray (113, 114) so that a unit load (10) transported on this tray slides on to the second tray (13, 14) of the second carriage (5) running beside it.

2. An installation according to claim 1, characterised in that a fixed intermediate plate (85), which is inclined transversely in relation to the direction of travel and which is overlapped by the tilted first tray (113, 114), is present at the transfer location (100).

3. An installation according to claims 1 or 2, characterised in that the second tray (13, 14) is tilted at the transfer location (100) by the second actuating element (38).

4. An installation according to claim 3, characterised in that the second tray (13, 14) is only tilted under the control of a controller (12) at the transfer location (100) if a unit load (10) is to be transferred from the first (113, 114) on to the second tray (13, 14) at this transfer location (100).

5. An installation according to claim 3, characterised in that at each transfer location (100) all the second trays (13, 14) are tilted and subsequently righted again..

6. An installation according to claim 5, characterised in that the outer edges of the tilted first (113, 114) and second trays (13, 14) overlap..

7. An installation according to any one of claims 3 to 6, characterised in that a delimiting wall (91, 92) is present at the transfer location (100), which delimiting wall protrudes above the edge of the tilted second tray (113, 114) (100) on the opposite side of the second carriage (5) to the first carriage (105).

8. An installation according to claim 7, characterised in that the delimiting wall (91, 92) is constructed as a circulating belt (91) over at least part of its length.

9. An installation according to any one of claims 3 to 8, characterised in that fixed guide rails (88, 89) are disposed at the transfer location (100) below at least one of the side edges of the tilted second tray (13, 14).

10. An installation according to any one of claims 3 to 9, characterised in that fixed guide rails (88, 89) which act on the second trays (13, 14) are present following the transfer location (100) for centring the second trays (13, 14) in their horizontal mid-position.

## Revendications

1. Installation de tri de colis, ou de paquets, constituée :
d'un premier rail (103), fermé en une première boucle (102), sur lequel sont disposés plusieurs premiers chariots (105), guidés sur le premier rail (103) en étant mutuellement reliés en une première chaîne sans fin (104) de chariots qui est entraînée par un premier entraînement (106), chariots qui présentent chacun une première coque (113, 114) pouvant pivoter autour d'un axe (128) s'étendant dans la direction longitudinale du chariot, coque qui peut pivoter dans au moins une direction d'une position de base horizontale dans une position de basculement, chaque premier chariot (105) possédant un premier organe d'actionnement (138) pour faire pivoter la première coque (113, 114) ;
et d'au moins un poste de chargement (9) le long de la première boucle (102), pour charger les premières coques (113, 114) de colis (10) ;
**caractérisée** par au moins un deuxième rail (3) fermé en une deuxième boucle (2) ;
sur lequel sont disposés plusieurs deuxièmes chariots (5), guidés sur le deuxième rail (3) en étant mutuellement accouplés en une deuxième chaîne sans fin (4) de chariots qui est entraînée par un deuxième entraînement (6), chariots qui présentent chacun une deuxième coque pivotante (13, 14), qui peut pivoter d'une position de base horizontale dans au moins une position de basculement, chaque deuxième chariot (5) possédant un deuxième organe d'actionnement (38) pour faire pivoter la deuxième coque (13, 14),
et au moins deux postes de transfert (100) par deuxième boucle (2), dans lesquels les deuxièmes chariots (5) de la deuxième boucle (2) se déplacent parallèlement aux premiers chariots (105) de la première boucle (102) ;
un dispositif de synchronisation (99), qui synchronise la vitesse et la position relative de la première chaîne de chariots (104) et de la deuxième chaîne de chariots (4) de telle sorte qu'aux postes de transfert (100), un premier chariot respectif (105) roule à côté d'un deuxième chariot (5) à la même vitesse et avec un décalage longitudinal prédéfini,
ainsi qu'au moins un organe de commutation (150) par poste de transfert (100), organe qui peut être commuté entre un état inactif et un état actif et qui, à l'état actif, actionne l'organe d'actionnement (138) d'un premier chariot (105) qui passe devant lui, et bascule la première coque (113, 114), de sorte qu'un colis (10) transporté sur cette coque glisse sur la deuxième coque (13, 14) du deuxième chariot (5) qui roule à côté.

2. Installation selon la revendication 1, **caractérisée** en ce qu'une tôle intermédiaire (85) stationnaire, inclinée transversalement à la direction de déplacement, est présente au poste de transfert (100), tôle qui est recouverte par la première coque (113, 114) basculée.

3. Installation selon la revendication 1 ou 2, **caractérisée** en ce que, au poste de transfert (100), la deuxième coque (13, 14) est basculée par le deuxième organe d'actionnement (38).

4. Installation selon la revendication 3, **caractérisée** en ce que, au poste de transfert (100), la deuxième coque (13, 14) n'est, sous la commande d'un dispositif de commande (12), basculée que si, à ce poste de transfert (100), un colis (10) doit être transféré de la première coque (113, 114) sur la deuxième coque (13, 14).

5. Installation selon la revendication 3, **caractérisée** en ce que, à chaque poste de transfert (100), toutes les deuxièmes coques (13, 14) sont basculées puis redressées.

6. Installation selon la revendication 5, **caractérisée** en ce que les bords extérieurs des premières coques (113, 114) et deuxièmes coques (13, 14) basculées se recouvrent.

7. Installation selon une des revendications 3 à 6, **caractérisée** en ce que, au poste de transfert (100), une paroi de délimitation (91, 92), qui se dresse au-dessus du bord des deuxièmes coques (13, 14) basculées est présente sur le côté du deuxième chariot (5) qui est opposé au premier chariot (105).

8. Installation selon la revendication 7, **caractérisée** en ce que la paroi de délimitation (91, 92) est réalisée sur au moins une partie de sa longueur sous forme de bande circulante (91).

9. Installation selon une des revendications 3 à 8, **caractérisée** en ce que, au poste de transfert (100), des rails de guidage (88, 89) stationnaires sont disposés en dessous d'au moins un des bords latéraux des deuxièmes coques (13, 14) basculées.

10. Installation selon une des revendications 3 à 9, **caractérisée** en ce que, en raccordement au poste de transfert (100), des rails de guidage (88, 89) stationnaires, agissant sur les deuxièmes coques (13, 14), sont présents pour centrer les deuxièmes coques (13, 14)dans leur position neutre horizontale.
